# FASCICULE DE BREVET EUROPEEN

(11) **EP 3 659 863 B1**
(45) Date de publication et mention de la délivrance du brevet: **21.07.2021**
(21) Numéro de dépôt: 19211904.8
(22) Date de dépôt: 27.11.2019
(51) Int. Cl.: B60R 3/00, B65F 3/00, G01B 7/00

(54) **DISPOSITIF DE PROTECTION D'UN MARCHEPIED**
VORRICHTUNG ZUM SCHUTZ EINER TRITTSTUFE
DEVICE FOR PROTECTING A STEP

(30) Priorité: 27.11.2018 FR 1871906; 28.12.2018 FR 1874335
(43) Date de publication de la demande: 03.06.2020
(73) Titulaire: Societe d'Equipement Manutention et Transports, 17000 La Rochelle (FR)
(72) Inventeur: ROY, MicKaël, 17540 Saint Sauveur d'Aunis (FR); DOLO, David, 17340 CHATELAILLON (FR)
(74) Mandataire: Novagraaf Technologies

(56) Documents cités:
- EP-A1- 1 861 285
- DE-A1-102006 028 567
- DE-U1-202014 103 270
- US-A1- 2008 252 034

## Description

L'invention concerne le domaine des véhicules comprenant un ou plusieurs marchepieds et plus particulièrement les bennes de collectes de déchets.

Ces marchepieds sont montés à l'arrière des véhicules, sont en porte à faux et peuvent être plus facilement soumis que le reste du véhicule à des chocs en partie inférieure, ces chocs sont causés par les trottoirs, l'inclinaison de la route ou divers autres obstacles pouvant se trouver sur la route. Ces marchepieds peuvent également recevoir des chocs latéraux. Ces chocs endommagent le marchepied qui doit alors être changé.

Le document DE202014103270U divulgue un marchepied d'un véhicule selon le préambule de la revendication 1.

Un but de la présente invention est de répondre aux inconvénients du document de l'art antérieur mentionné ci-dessus et en particulier, d'éviter d'avoir à changer le marchepied en n'endommageant qu'une interface du marchepied en cas de choc et de pouvoir réparer en ne remplaçant qu'une seule pièce.

Pour cela, un premier aspect de l'invention concerne un dispositif de protection d'un marchepied d'un véhicule comprenant une interface déformable et un marchepied fixé sur l'interface, il est caractérisé en ce que l'interface (4) présente deux bords (40) et (41) perpendiculaires à une partie centrale (42), l'ensemble forme un U en vue de dessus et que la partie centrale (42) du U présente une face inclinée (420), l'interface (4) montée sur le véhicule ayant sa partie avant (40) plus haute que sa partie arrière (41) qui est disposée à une hauteur inférieure ou égale à celle de la marche (1), le bord avant du U permettant la fixation du marchepied au véhicule et le bord arrière du U est relié directement ou indirectement au marchepied. Ce dispositif constitue une interface « sacrificielle » qui évite de changer le marchepied complet en cas de chocs latéraux ou dessous la marche.

Cette conception modulaire permet d'améliorer la maintenabilité du marchepied. En effet, en cas de choc latéral la forme en U de l'interface va se déformer transversalement pour amortir le choc et en cas d'obstacle en partie basse l'interface va se déformer verticalement.

Avantageusement, l'interface est en métal découpé, plié et soudé. L'interface est ainsi facile à fabriquer et peu coûteuse. Elle peut être aussi réalisé par emboutissage.

Selon une disposition particulière, l'interface comprend une tôle de fermeture en partie inférieure. Cette tôle permet d'améliorer la rigidité de l'interface et de faire glisser tout obstacle venant du dessous.

Avantageusement, l'interface est recouverte par un capot. Ce capot permet de protéger l'interface et d'éviter qu'elle serve de marchepied.

L'invention concerne aussi un véhicule comprenant un dispositif avec au moins une des caractéristiques précédentes, le dispositif étant disposé sur au moins un coté arrière du véhicule et l'interface étant fixée au véhicule uniquement par un bord avant du U. L'interface peut ainsi plus facilement se déformer en cas de choc qu'il soit latéral ou vertical. L'autre branche du U est reliée directement ou indirectement au marchepied. La face inclinée du U permet de faire glisser l'obstacle sous le véhicule en marche avant si celui-ci n'est pas trop rigide ou de déformer l'interface sinon. En effet, l'inclinaison de haut en bas et d'avant en arrière dans le sens de roulement du véhicule facilite ce glissement.

Selon une caractéristique particulière, l'interface a une partie inférieure placée à une distance du sol inférieure ou égale à la distance du sol de la marche. C'est ainsi l'interface qui touche en premier le sol ou l'obstacle.

Avantageusement, l'interface est fixée de façon démontable. Cela facilite la réparabilité du dispositif.

D'autres caractéristiques et avantages de la présente invention apparaîtront plus clairement à la lecture de la description détaillée qui suit de plusieurs modes de réalisation de l'invention donnés à titre d'exemple nullement limitatif et illustrés par les dessins annexés, dans lesquels :
[Fig. 1] représente une vue éclatée d'un marchepied selon l'invention;
[Fig. 2] est le détail d'un dispositif de protection selon l'invention;
[Fig.3] montre le dispositif sur un obstacle,
[Fig. 4] est un éclaté du dispositif,
[Fig. 5] montre un module de détection de présence,
[Fig. 6] est une vue d'un premier type de véhicule équipé d'un marchepied selon l'invention,

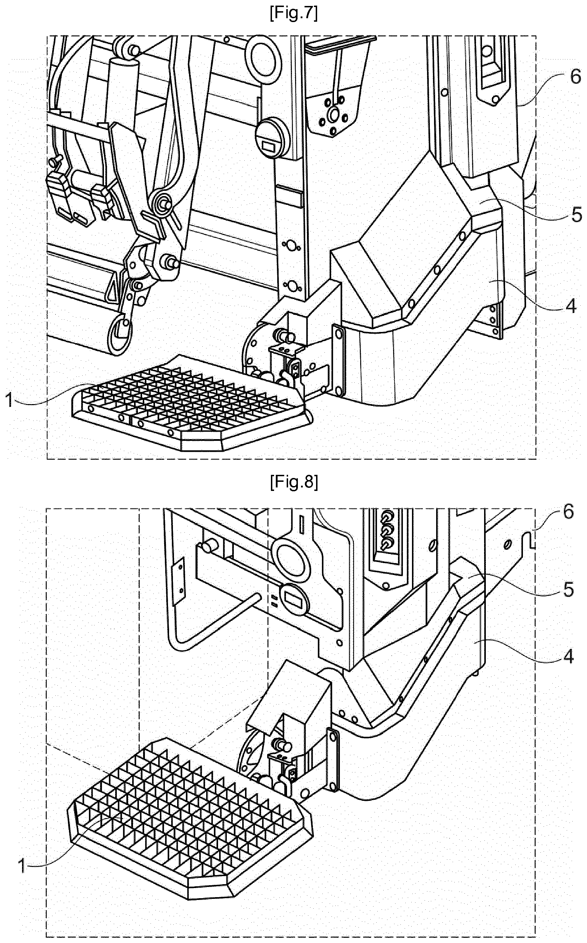

[Fig. 7] est une vue d'un deuxième type de véhicule équipé d'un marchepied selon l'invention,
[Fig. 8] est une vue d'un troisième type de véhicule équipé d'un marchepied selon l'invention.

Pour la suite de la description, on considérera que le haut correspond au haut des figures et le bas au bas des figures. De la même façon, l'avant correspond à l'avant du véhicule et l'extérieur à l'extérieur du véhicule.

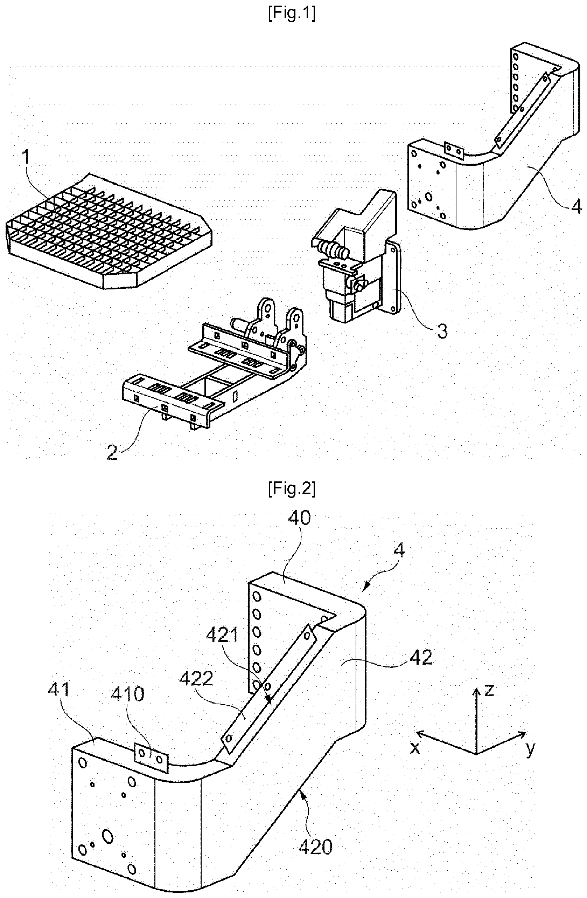

Le marchepied selon l'invention illustré à la figure 1, comprend une marche 1, un support de marche 2, un module de détection 3 et une interface 4. La marche 1 est fixée au support 2 qui est articulé de façon à pouvoir être abaissé ou relevé. Le module de détection 3 est disposé entre le support de marche 2 et l'interface 4.

L'interface 4 (figure 2) présente deux bords 40 et 41 perpendiculaires à une partie centrale 42, l'ensemble forme un U en vue de dessus. Le bord 40 situé à l'avant est fixé sur le véhicule, tandis que le bord 41 situé à l'arrière est fixé au module de détection 3. La partie centrale 42 a une face inférieure inclinée 420 et une face supérieure 421 également inclinée. La face supérieure 420 comprend des supports 410, 422 pour la fixation d'un capot 5 présentant une inclinaison.

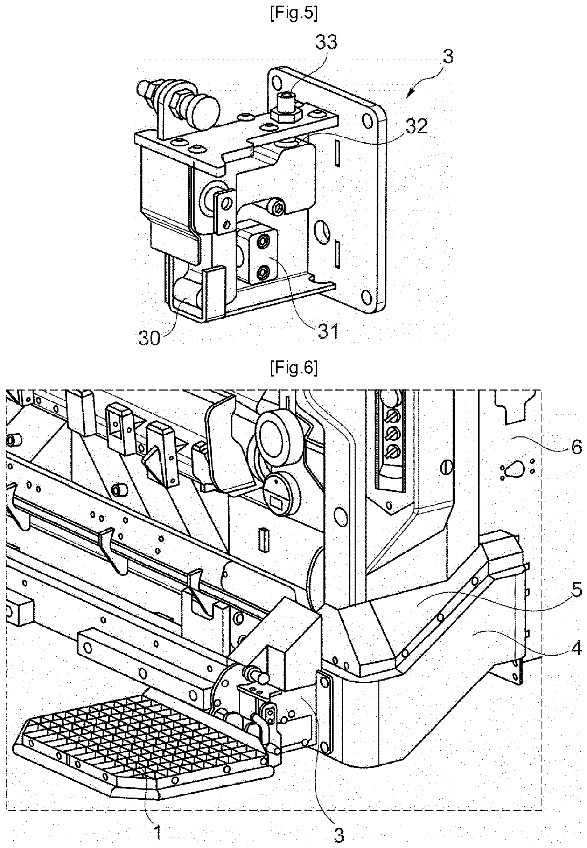

Ce capot 5 permet d'éviter que les utilisateurs montent sur l'interface. On peut voir à la figure 6 que l'interface 4 est couverte par un capot 5 en plusieurs parties.

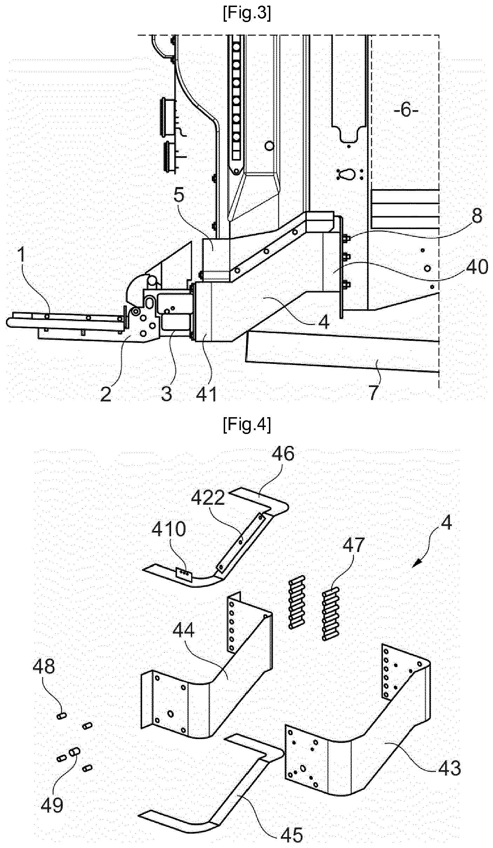

On peut voir à la figure 4 que cette interface 4 est composée de plusieurs éléments en tôle pliée :
- une tôle intérieure 44 en forme de U qui assure la rigidité de l'ensemble et a une forme inclinée pour éviter tout point dur;
- une tôle extérieure 43 en forme de U qui assure la rigidité de l'ensemble et a une forme inclinée pour éviter tout point dur;
- une tôle de fermeture inférieure 45 en forme de U qui assure la rigidité de l'ensemble et a une forme inclinée pour éviter tout point dur;
- une tôle fermeture supérieure 46 en forme de U qui assure la rigidité de l'ensemble et permet la fixation d'un capot de protection;
- des entretoises 47 et 48 qui assurent le positionnement des tôles, permet le passage des vis de fixations et assurent l'étanchéité de la pièce;
- une entretoise 49 qui assure le positionnement des tôles, permet le passage des câbles et assurent l'étanchéité de la pièce;
- des supports 410 et 422 du capot 5.

Le capot 5 n'est fixé à l'interface 4 qu'en deux points:
- le support 410 situé à l'arrière et
- le support 422 située sur le côté extérieur; ainsi le capot 5 pourra se déformer avec l'interface 4.

L'interface 4 est déformable afin d'amortir les chocs latéraux et/ou verticaux. Elle pourra ainsi se déformer soit par enfoncement de la partie centrale 42, soit déformation verticale, le bord arrière 41 remontant vers le haut. Le capot 5 est fixé uniquement sur l'interface 4 et non sur le véhicule 6 afin de permettre la déformation de ladite interface 4.

Le module de détection 3 illustré figure 5 comprend: une zone d'appui 30 du support 2 de marche, un capteur 31 avec son support, une vis de réglage 33 de l'effort de détection et un ressort de rappel 32.

L'interface 4 est conçue pour se déformer en cas de choc latéral ou de choc vertical. La forme inclinée de sa face inférieure 420 permet de glisser sur l'obstacle 7 (par exemple un trottoir) et d'éviter tout point dur en cas de choc. L'interface 4 ne se bloque pas sur ce type d'obstacle, ce qui lui évite de se casser sur l'obstacle.

Comme visible figure 3, l'interface 4 montée sur le véhicule a sa partie avant 40 plus haute que sa partie arrière 41 qui est disposée à une hauteur inférieure ou égale à celle de la marche 1. Ainsi la norme définit une hauteur maximum pour la marche 1 à 450mm du sol, ce qui laisse une garde au sol d'environ 350mm sous la marche 1. Dans ce cas, l'interface 4 devra donc être à une distance inférieure ou égale à 350mm du sol.

L'interface 4 est reliée au véhicule et au module de détection à l'aide de vis et d'écrous 8, ce qui facilite le démontage de l'interface 4 et son remplacement en cas de déformation lors d'un choc.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif de protection d'un marchepied d'un véhicule comprenant une interface déformable (4) et un marchepied (1) fixé sur l'interface (4) **caractérisé en ce que** l'interface (4) présente deux bords (40, 41) perpendiculaires à une partie centrale (42), l'ensemble forme un U en vue de dessus et que la partie centrale (42) du U présente une face inclinée (420), l'interface (4) montée sur le véhicule ayant sa partie avant (40) plus haute que sa partie arrière (41) qui est disposée à une hauteur inférieure ou égale à celle de la marche (1), le bord avant du U permettant la fixation du marchepied au véhicule et le bord arrière du U est relié directement ou indirectement au marchepied.

2. Dispositif selon la revendication précédente **caractérisé en ce que** l'interface (4) est en métal découpé, plié, soudé.

3. Dispositif selon une des revendications précédentes **caractérisé en ce que** l'interface (4) comprend une tôle de fermeture (45) en partie inférieure.

4. Dispositif selon une des revendications précédentes **caractérisé en ce qu'**il comprend un module de détection (3) disposé entre l'interface (4) et le support de marche (2).

5. Dispositif selon une des revendications précédentes **caractérisé en ce que** l'interface (4) est recouverte par un capot (5).

6. Véhicule (6) comprenant un dispositif selon une des revendications précédentes disposé sur au moins un côté arrière du véhicule et que l'interface (4) est fixée au véhicule uniquement par un bord avant (40) du U.

7. Véhicule (6) selon la revendication précédente **caractérisé en ce que** l'interface (4) a une partie inférieure (420) placée à une distance du sol inférieure ou égale à la distance du sol de la marche.

8. Véhicule (6) selon une des revendications 6 à 7 **caractérisé en ce que** l'interface (4) est fixé de façon démontable.]

## Patentansprüche

1. Vorrichtung zum Schutz eines Trittbretts eines Fahrzeugs, umfassend eine verformbare Verbindungsstelle (4) und ein an der Verbindungsstelle (4) befestigtes Trittbrett (1), **dadurch gekennzeichnet, dass** die Verbindungsstelle (4) zwei zu einem Mittelteil (42) senkrechte Kanten (40, 41) aufweist, wobei die Baugruppe in Draufsicht ein U bildet, und dass der mittlere Teil (42) des U eine geneigte Fläche (420) aufweist, wobei der vordere Teil (40) der am Fahrzeug montierten Verbindungsstelle (4) höher als ihr hinterer Teil (41) ist, der in einer Höhe niedriger oder gleich des Tritts (1) angeordnet ist, wobei die Vorderkante des U die Montage des Trittbretts am Fahrzeug ermöglicht, und die Hinterkante des U direkt oder indirekt mit dem Trittbrett verbunden ist.

2. Vorrichtung nach dem vorhergehenden Anspruch, **dadurch gekennzeichnet, dass** die Verbindungsstelle (4) aus geschnittenem, gefaltetem, geschweißtem Metall besteht.

3. Vorrichtung nach einem der vorhergehenden Ansprüche, **dadurch gekennzeichnet, dass** die Verbindungsstelle (4) im unteren Teil ein Abschlussblech (45) umfasst.

4. Vorrichtung nach einem der vorhergehenden Ansprüche, **dadurch gekennzeichnet, dass** sie ein zwischen der Verbindungsstelle (4) und dem Trittträger (2) angeordnetes Erfassungsmodul (3) umfasst.

5. Vorrichtung nach einem der vorhergehenden Ansprüche, **dadurch gekennzeichnet, dass** die Verbindungsstelle (4) von einer Abdeckung (5) abgedeckt ist.

6. Fahrzeug (6), umfassend eine Vorrichtung nach einem der vorhergehenden Ansprüche, die an mindestens einer Rückseite des Fahrzeugs angeordnet ist und dass die Verbindungsstelle (4) nur durch eine Vorderkante (40) des U am Fahrzeug befestigt ist.

7. Fahrzeug (6) nach dem vorhergehenden Anspruch, **dadurch gekennzeichnet, dass** die Verbindungsstelle (4) einen unteren Teil (420) aufweist, der in einem Abstand vom Boden angeordnet ist, der kleiner oder gleich dem Abstand vom Boden zur Stufe ist.

8. Fahrzeug (6) nach einem der Ansprüche 6 bis 7, **dadurch gekennzeichnet, dass** die Verbindungsstelle (4) abnehmbar befestigt ist.

## Claims

1. Device for protecting a vehicle step comprising a deformable interface (4) and a step (1) fixed to the interface (4), **characterised in that** the interface (4) has two edges (40, 41) perpendicular to a central part (42), the assembly forms a U when viewed from above, and **in that** the central part (42) of the U has an inclined face (420), the interface (4) mounted on the vehicle having its front part (40) higher than its rear part (41) which is disposed at a height lower than or equal to that of the step (1), the front edge of the U allowing the attachment of the step to the vehicle and the rear edge of the U is connected directly or indirectly to the step.

2. Device according to the preceding claim, **characterised in that** the interface (4) is made of cut, bent, welded metal.

3. Device according to one of the preceding claims, **characterised in that** the interface (4) comprises a closing plate (45) at the bottom.

4. Device according to one of the preceding claims, **characterised in that** it comprises a detection module (3) arranged between the interface (4) and the walking support (2).

5. Device according to one of the preceding claims, **characterised in that** the interface (4) is covered by a cover (5).

6. A vehicle (6) comprising a device according to one of the preceding claims disposed on at least one rear side of the vehicle and that the interface (4) is attached to the vehicle only by a front edge (40) of the U.

7. Vehicle (6) according to the preceding claim, **characterised in that** the interface (4) has a lower part (420) placed at a distance from the ground less than or equal to the distance from the ground of the step.

8. A vehicle (6) according to any of claims 6 to 7 **characterised in that** the interface (4) is removably attached.]
